# FASCICULE DE BREVET EUROPEEN

(11) **EP 3 751 154 B1**
(45) Date de publication et mention de la délivrance du brevet: **10.04.2024**
(21) Numéro de dépôt: 20179274.4
(22) Date de dépôt: 10.06.2020
(51) Int. Cl.: F16B 5/01, F16B 11/00, F16B 37/12

(54) **INSERT FILETÉ POUR PANNEAU SANDWICH, PROCÉDÉ D'ASSEMBLAGE ET ASSEMBLAGE CORRESPONDANT**
GEWINDEEINSATZ FÜR SANDWICHPANEEL, ZUSAMMENBAUVERFAHREN UND ENTSPRECHENDER ZUSAMMENBAU
THREADED INSERT FOR A SANDWICH PANEL, ASSEMBLY METHOD AND CORRESPONDING ASSEMBLY

(30) Priorité: 12.06.2019 FR 1906235
(43) Date de publication de la demande: 16.12.2020
(73) Titulaire: SECAM, 74460 Marnaz (FR)
(72) Inventeur: GARBY, Lucien, 74460 MARNAZ (FR); PERNAT, Gérard, 74460 MARNAZ (FR); FONTANET, Florent, 74460 MARNAZ (FR); RIGAL, David, 74460 MARNAZ (FR)
(74) Mandataire: Innovincia

(56) Documents cités:
- WO-A1-2018/178193
- DE-A1-102012 215 587
- FR-A1- 3 014 968
- US-A- 3 019 865
- US-A1- 2004 265 091
- US-B2- 9 702 394

## Description

La présente invention concerne un insert, et particulièrement un insert fileté adapté pour des panneaux sandwich type composite présentant notamment une structure en nid d'abeille ou en mousse. L'invention concerne aussi un procédé d'assemblage d'un tel insert, ainsi qu'un assemblage comprenant un tel insert.

Un panneau sandwich est souvent constitué en son âme par exemple d'une structure en nid d'abeille ou d'une structure à base de mousse, sur laquelle est apposée de part et d'autre des peaux à base de résine et de fibre de verre. Dans le cas des panneaux sandwichs comprenant une structure en nid d'abeille comparable aux alvéoles d'abeille, cette structure sert à renforcer la résistance d'un élément tout en garantissant une légèreté maximale. L'âme en nid d'abeille d'un panneau sandwich est constituée d'un taux de vide avoisinant 95 % permettant la légèreté du matériau constitué en aluminium ou encore en polypropylène. Dans le cas des panneaux sandwichs comprenant une structure à base de mousse obtenue à partir de divers composants tels que le polyuréthane, la colle-polyester, la colle-époxydique ou encore en mousse métallique composée d'aluminium, ce type de structure permet d'offrir un bon rapport rigidité/poids, n'absorbant pas l'eau et présentant une isolation thermique optimale. Ces panneaux sont très largement utilisés dans l'industrie aéronautique, mais aussi dans l'automobile, le nautisme, l'éolien ainsi que le ferroviaire.

Compte tenu de leur structure très particulière, il est difficile d'utiliser des moyens de fixation classiques tels que des vis. Une solution connue consiste à employer un dispositif d'insert inséré dans un trou préalablement réalisé dans le panneau sandwich. La difficulté est ensuite de lier le dispositif d'insert avec le panneau sandwich. En effet, cette liaison doit présenter suffisamment de résistance pour permettre de maintenir un élément au panneau.

Le document WO2018/178193 présente un exemple d'insert destiné à être positionné dans un trou correspondant de panneau sandwich, avec une jupe extérieure munie de fentes et d'un moyen de fixation pour établir une connexion ajustée au panneau.

On connaît également des dispositifs d'insert formés de deux parties distinctes comprenant un rivet tubulaire fileté et une douille d'espacement. Le rivet tubulaire fileté comprend une chambre de déformation, une zone extérieurement filetée complémentaire au filetage interne de la douille d'espacement pour le raccordement entre le rivet tubulaire fileté et la douille d'espacement. La douille d'espacement comprend également un évidement pour recevoir un outil d'ajustement. Le procédé d'assemblage de ce type d'insert dans un trou d'un panneau sandwich comprend plusieurs étapes. Une première étape consiste à positionner le dispositif d'insert dans le trou. La deuxième étape consiste à déformer la chambre de déformation du rivet avec un outil de positionnement afin de former une connexion mécanique entre l'insert et la peau de surface du panneau sandwich. Une étape finale consiste à faire tourner la douille d'espacement par rapport au rivet au moyen d'un outil d'ajustement jusqu'à ce que la douille d'espacement soit amenée en butée contre le fond du trou, de sorte que le dispositif d'insert soit bloqué dans le trou. Ainsi, le procédé d'assemblage nécessite l'utilisation de plusieurs outillages, ce qui augmente le temps d'assemblage et donc le coût d'un panneau sandwich muni desdits dispositifs d'insert. De plus, l'utilisation de ce type de dispositif entraîne la délamination voire le décollement de la peau inférieure opposée à celle de surface dudit panneau sandwich, notamment si le vissage n'est pas correctement maîtrisé.

En outre, une fois assemblée avec le panneau sandwich, la tête des dispositifs d'insert dépasse de la surface de la peau du panneau sandwich, ce qui empêche de fixer certains éléments directement contre le panneau sandwich, pouvant entraîner un défaut de stabilité de l'élément fixé.

Le document US9702394 présente un exemple d'insert avec un boîtier d'insert qui peut être encastré dans un trou correspondant de panneau sandwich et un écrou flottant reçu dans une cavité du boîtier d'insert. Des réceptacles ouverts et en saillie sur les côtés du boîtier permettent l'injection d'une substance de liaison.

Le document US2004/0265091 présente un autre exemple d'insert avec une partie ayant un filetage externe destiné à être positionné dans un trou correspondant d'un panneau et assemblée à une deuxième partie à bride présentant un filetage interne, la tête des deux parties dépassant de part et d'autre du panneau.

Le document US3019865 présente un autre exemple d'insert en plusieurs parties avec une bague d'encastrement qui peut être encastrée dans un panneau sandwich et recevant un écrou flottant.

Le document DE102012215587 présente une alternative d'insert réalisé d'une seule pièce qui peut être positionné dans un trou correspondant de panneau sandwich et présentant une tête qui reste affleurante à la surface du panneau sandwich après insertion.

On connaît du document FR1362592 publié sous le numéro FR3014968, au nom du demandeur SECAM, un insert fileté pour panneau sandwich. Cet insert connu présente à son extrémité libre une queue d'accroche dirigée vers le fond du trou du panneau sandwich et destinée à coopérer avec une substance durcissable alors injectée dans le trou du panneau sandwich. Le contour de cette queue d'accroche présente des aspérités ainsi que des dents apportant une meilleure résistance de l'assemblage face aux forces de tractions. Cependant, les aspérités de la queue d'accroche peuvent causer des fissures, sources de cassures dans la substance durcissable et nuisant à la tenue de l'assemblage entre l'insert et le panneau sandwich.

Enfin, l'injection de la substance durcissable directement au travers du tube interne peut entraîner le dépôt de substance durcissable sur le taraudage dudit tube interne, empêchant la bonne liaison entre le rivet tubulaire fileté et la douille d'espacement.

L'invention vise à proposer un insert fileté adapté pour des panneaux sandwich type composite présentant une structure en nid d'abeille ou encore à base de mousse, permettant de pallier un ou plusieurs inconvénients de l'art antérieur.

L'invention a également pour objectif de favoriser l'automatisation de la pose de l'insert.

À cet effet, l'invention a pour but de proposer un insert selon la revendication 1, destiné à être assemblé dans un trou d'un panneau sandwich, comprenant un corps cylindrique creux ayant une extrémité à rebord déformable par un outil de pose permettant une connexion mécanique par déformation avec une peau de surface dudit panneau sandwich, ledit insert comportant une queue d'accroche dans le prolongement du corps cylindrique ainsi qu'un tube interne destiné à coopérer avec l'outil de pose, caractérisé en ce que ladite queue d'accroche présente au moins une gorge circonférentielle et une nervure périphérique, la gorge circonférentielle et la nervure périphérique présentant chacune un profil transversal arrondi pour pouvoir coopérer avec une substance durcissable.

Le tube interne peut être coaxial avec le corps cylindrique.

Il peut présenter un moyen de liaison interne, tel qu'un taraudage interne, destiné à coopérer avec l'outil de pose.

Le contour arrondi de la queue d'accroche permet d'éviter la concentration des contraintes mécaniques et d'éviter l'apparition de fissures, dans la substance durcissable.

Le tube interne est borgne.

Le corps cylindrique présente, à l'extrémité opposée du rebord, un fond transversal le séparant de la queue d'accroche et traversé par le tube interne.

Ladite queue d'accroche comporte au moins un premier canal et un deuxième canal parallèles à l'axe du corps cylindrique, qui peuvent être ménagés au travers de ladite gorge circonférentielle et de la nervure périphérique, les canaux étant disposés de part et d'autre du tube interne.

Les canaux débouchent d'une part dans la gorge circonférentielle, et éventuellement dans la nervure périphérique.

D'autre part, les canaux débouchent au travers dudit fond transversal.

L'injection au travers d'un canal déporté du tube interne permet d'éviter le dépôt de substance durcissable sur le taraudage interne dudit tube interne afin d'éviter toute pollution empêchant le vissage de la vis après polymérisation de la substance durcissable ou entraînant l'impossibilité de dévisser l'assemblage.

Ledit insert peut en outre comporter une ou plusieurs caractéristiques suivantes prises séparément ou en combinaison.

La queue d'accroche présente une forme générale cylindrique dans le prolongement du corps cylindrique, le diamètre de ladite queue d'accroche au niveau de la nervure périphérique étant inférieur ou égal au diamètre du corps cylindrique.

Les profils transversaux de la gorge circonférentielle et de la nervure périphérique se succèdent de manière continue.

La gorge circonférentielle et la nervure périphérique présentent des profils transversaux semi-circulaires.

La queue d'accroche comporte deux gorges circonférentielles et deux nervures périphériques se succédant par alternance.

Selon un aspect avantageux, au moins l'un des canaux, de préférence le premier canal, est au moins en partie conique ou tronconique. Le premier canal est un canal d'injection au travers duquel la substance durcissable peut être injectée.

En particulier, au moins l'un des canaux, de préférence le premier canal, peut présenter une première portion conique ou tronconique et une deuxième portion cylindrique. La première portion conique ou tronconique est ménagée au moins dans le corps cylindrique de l'insert. La deuxième portion cylindrique est ménagée dans la queue d'accroche.

Un tel canal d'injection au moins en partie conique ou tronconique permet de faciliter l'insertion d'une aiguille pour l'injection de la substance durcissable, généralement de forme conique. De plus, cela offre un meilleur contact et permet de garantir l'étanchéité au niveau du canal d'injection notamment lorsque le déplacement et le positionnement de l'aiguille sont automatisés. En effet, lorsqu'un robot vient déposer, généralement avec une certaine force, l'aiguille d'injection conique au niveau du canal d'injection, lorsque ce dernier est droit par exemple cylindrique l'aiguille vient toucher l'arrête du canal d'injection, ce qui risque d'abîmer l'aiguille et d'entraîner une perte en étanchéité.

En outre, notamment en cas d'éventuelle imprécision du positionnement d'un robot industriel déplaçant l'aiguille, les formes coniques permettent un centrage de l'aiguille par rapport au canal d'injection.

Le deuxième canal peut être identique ou non au premier canal. Le deuxième canal peut être au moins en partie conique ou tronconique.

En variante, le deuxième canal peut être cylindrique. Le premier canal et le deuxième canal peuvent être de même diamètre.

En alternative, le premier canal et le deuxième canal peuvent être de diamètres différents.

Lorsque le deuxième canal présente un diamètre inférieur à celui du premier canal, cela crée un étranglement au niveau du deuxième canal qui forme un canal d'évent, permettant de ralentir la sortie de la substance via ce canal d'évent et éviter l'inclusion d'air.

À l'inverse, lorsque deuxième canal présente un diamètre supérieur à celui du premier canal, cela permettrait par exemple si la viscosité de la substance injectée est trop forte, de faciliter au contraire la sortie de la substance via ce canal d'évent.

Le premier canal et le deuxième canal dudit insert présentent chacun un diamètre compris entre 1 et 3 mm.

Les nervures périphériques et les gorges circonférentielles sont interrompues par le premier et le deuxième canal et lesdits canaux présentent des ouvertures radiales vers l'extérieur.

Les ouvertures radiales des nervures périphériques présentent un diamètre compris entre 3 et 6mm.

Les profils transversaux semi-circulaires de la gorge circonférentielle et de la nervure périphérique de la queue d'accroche sont interrompus par l'au moins une découpe parallèle à l'axe de révolution et étant éloignée du premier canal et du deuxième canal de ladite queue d'accroche.

Ledit insert est réalisé en une seule pièce.

En alternative, ledit insert est réalisé en trois pièces.

Une première pièce peut comprendre un organe d'encastrement avec le corps cylindrique et la queue d'accroche séparés l'un de l'autre par le fond transversal du corps cylindrique, la queue d'accroche comportant un conduit interne coaxial avec le corps cylindrique et communicant avec un creux interne de forme oblongue disposé dans la nervure périphérique extrémale formant l'extrémité libre de la queue d'accroche, ledit creux étant accessible par une ouverture sur la surface de ladite nervure périphérique extrémale.

Une deuxième pièce peut comprendre le tube interne, ledit tube interne étant solidaire d'un pied transversal à l'une de ses extrémités et étant configuré pour être inséré dans le conduit interne de la queue d'accroche, le pied étant configuré pour se loger dans le creux de la nervure périphérique extrémale.

Une troisième pièce peut comprendre un capot configuré pour fermer ladite ouverture de la nervure périphérique extrémale.

L'assemblage d'un insert en trois pièces permet d'offrir des degrés de liberté supplémentaires afin d'éviter tout hyperstatisme lors de l'assemblage.

Le creux interne présente des dimensions supérieures aux dimensions du pied solidaire du tube interne et le diamètre du conduit interne est inférieur ou égal à la largeur du creux interne et supérieur au diamètre du tube interne, de manière à permettre des degrés de liberté supplémentaires.

L'ouverture sur la surface de la nervure périphérique extrémale présente une forme oblongue avec une entrée latérale permettant l'insertion du capot par coulissement.

Selon un autre aspect, le corps cylindrique de l'insert comporte une paroi périphérique déformable.

La paroi périphérique déformable peut comporter au moins une zone de faiblesse ou au moins deux points de faiblesse. Cela forme une amorce favorisant et localisant la déformation de la paroi périphérique déformable.

La paroi périphérique déformable du corps cylindrique de l'insert peut présenter au moins deux, de préférence au moins trois, orifices équidistants. Lesdits orifices sont avantageusement disposés dans un même plan perpendiculaire à l'axe de révolution.

Ces orifices équidistants sur la paroi périphérique déformable forment des points de faiblesse qui permettent d'affaiblir ladite paroi en ces points et garantir la localisation de la déformation au niveau de ces orifices en même temps et pas seulement au niveau d'un endroit de la paroi de manière aléatoire comme cela pouvait être le cas dans les solutions antérieures.

L'invention a encore pour objet un insert destiné à être assemblé dans un trou d'un panneau sandwich, comprenant un corps cylindrique creux ayant une extrémité à rebord déformable par un outil de pose permettant une connexion mécanique par déformation avec une peau de surface du panneau sandwich, l'insert comportant une queue d'accroche dans le prolongement du corps cylindrique ainsi qu'un tube interne borgne destiné à coopérer avec l'outil de pose, tel que la queue d'accroche présente au moins une gorge circonférentielle et une nervure périphérique, et comporte au moins un premier canal et un deuxième canal parallèles à l'axe du corps cylindrique, disposés de part et d'autre du tube interne et débouchant dans la gorge circonférentielle, et éventuellement dans la nervure périphérique.

Les canaux peuvent éventuellement être ménagés au travers de ladite gorge circonférentielle et de la nervure périphérique.

Le corps cylindrique peut présenter, à l'extrémité opposée du rebord, un fond transversal le séparant de la queue d'accroche et traversé par le tube interne. Les canaux débouchent d'autre part au travers du fond transversal.

Au moins l'un des canaux, de préférence le premier canal, est au moins en partie conique ou tronconique. Le premier canal est le canal au travers duquel une substance durcissable peut être injectée.

En particulier, au moins l'un des canaux, de préférence le premier canal, peut présenter une première portion conique ou tronconique et une deuxième portion cylindrique. La première portion conique ou tronconique est ménagée au moins dans le corps cylindrique de l'insert. La deuxième portion cylindrique est ménagée dans la queue d'accroche.

Le deuxième canal peut être identique ou non au premier canal.

Le deuxième canal peut être au moins en partie conique ou tronconique. En variante, le deuxième canal peut être cylindrique.

Le premier canal et le deuxième canal peuvent être de même diamètre.

En alternative, le premier canal et le deuxième canal peuvent être de diamètres différents.

L'invention a aussi pour objet un procédé d'assemblage d'un insert tel que décrit précédemment, dans un trou d'un panneau sandwich, au moyen d'un outil de pose, caractérisé en ce qu'il comporte les étapes successives suivantes :
- on positionne l'insert par pression axiale dans le trou préalablement formé dans le panneau sandwich,
- on exerce une pression axiale sur l'extrémité évasée à rebord de l'insert à l'aide d'un embout de l'outil de pose pour faire pénétrer l'extrémité évasée à rebord de l'insert dans la peau de surface du panneau sandwich, et simultanément on tire le tube interne à l'aide de l'outil de pose de manière à déformer une paroi périphérique déformable du corps cylindrique de l'insert, et former une première zone de connexion mécanique entre l'insert et le panneau sandwich, de sorte qu'en fin de montage, l'extrémité à rebord de l'insert et l'extrémité du tube interne viennent affleurer la surface du panneau sandwich,

- on injecte une substance durcissable par l'ouverture et au travers du premier canal de la queue d'accroche,
- on interrompt l'injection lorsque la substance durcissable est détectée dans le deuxième canal à proximité du fond du corps cylindrique.

L'invention a également pour objet un assemblage comportant un insert tel que décrit précédemment et un panneau sandwich.

D'autres caractéristiques et avantages de l'invention apparaîtront plus clairement à la lecture de la description suivante, donnée à titre d'exemple illustratif et non limitatif, en regard des figures annexées sur lesquelles :
[Fig.1] représente une vue en perspective de l'insert selon l'invention,
[Fig.2] est une vue schématique en coupe transversale d'un panneau sandwich comportant un trou,
[Fig.3] est une vue schématique en coupe transversale de l'insert de la figure 1 positionné dans le trou du panneau sandwich de la figure 2 au cours d'un procédé d'assemblage,
[Fig.4A] est une vue en coupe transversale selon le plan de coupe B-B' de l'insert selon la figure 1,
[Fig.4B] est une vue en coupe transversale selon le plan de coupe D-D' de l'insert selon la figure 1,
[Fig.5] est une vue schématique en coupe longitudinale du corps cylindrique de l'insert selon la figure 1,
[Fig.6] est une vue en coupe transversale d'un insert taraudé selon la figure 1 et assemblé dans un panneau sandwich,
[Fig.7] est une vue en coupe transversale d'un premier mode de réalisation d'un insert selon l'invention,
[Fig.8A] est une vue en coupe transversale d'un deuxième mode de réalisation d'un insert selon l'invention,
[Fig.8B] est une vue selon le plan de coupe transversale F-F' de la nervure périphérique d'un insert selon le deuxième mode de réalisation,
[Fig.9] est un schéma en trois dimensions d'un insert « trois pièces » selon un troisième mode de réalisation,
[Fig. 10A] est une vue en coupe transversale selon le plan de coupe B-B' d'un insert « trois pièces » assemblé dans un trou d'un panneau sandwich,
[Fig. 10B] est une vue en coupe transversale selon le plan de coupe D-D' d'un insert « trois pièces » assemblé dans un trou d'un panneau sandwich,
[Fig. 11] est un schéma en trois dimensions d'un quatrième mode de réalisation d'un insert selon l'invention,
[Fig.12A] est une vue schématique en coupe transversale du trou du panneau sandwich,
[Fig.12B] est une vue schématique en coupe transversale de l'insert positionné dans le trou du panneau sandwich,
[Fig.12C] est une vue schématique en coupe transversale de l'outil de pose positionné avec l'insert dans le trou du panneau sandwich,
[Fig.12D] est une vue schématique en coupe transversale de la déformation mécanique de l'insert par l'outil de pose,
[Fig.12E] est une vue schématique en coupe transversale de l'insert assemblé dans le trou d'un panneau sandwich après injection de substance durcissable,
[Fig.12F] est une vue schématique en coupe transversale d'un assemblage d'un élément plaqué sur le panneau sandwich par une vis coopérante avec le tube interne dudit insert,
[Fig.13a] est une vue en perspective d'une variante de l'insert présentant un nombre prédéfini d'orifices sur une paroi périphérique déformable d'un corps cylindrique de l'insert avant sertissage,
[Fig.13b] est une vue en coupe de l'insert de la figure 13a après sertissage,
[Fig.14] est une vue en coupe transversale d'une variante de l'insert comprenant des canaux déportés en partie tronconiques,
[Fig.15] est une vue de dessus d'une autre variante de l'insert comprenant des canaux déportés différents,
[Fig.16] est une vue en coupe transversale de la variante de l'insert de la figure 15.

Les éléments identiques sur les différentes figures portent les mêmes références numériques.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la description, on peut indexer certains éléments, comme par exemple premier, deuxième élément. Il s'agit d'un simple indexage pour différencier et dénommer des éléments proches mais non identiques. Cette indexation n'implique pas forcément une priorité d'un élément par rapport à un autre et on peut aisément interchanger de telles dénominations sans sortir du cadre de la présente description. Cette indexation n'implique pas non plus forcément un ordre dans le temps.

Dans les figures de la présente invention, l'âme du panneau sandwich représenté dans lesdites figures présente une structure en nid d'abeille, cette structure est présentée à titre d'exemple et de manière non exhaustive. L'insert selon l'invention étant également configuré pour être assemblé dans un panneau sandwich présentant structure en mousse obtenue à partir de divers composés tels que du polyuréthane, de la colle-polyester, de la colle-époxydique ou encore en mousse métallique composée d'aluminium.

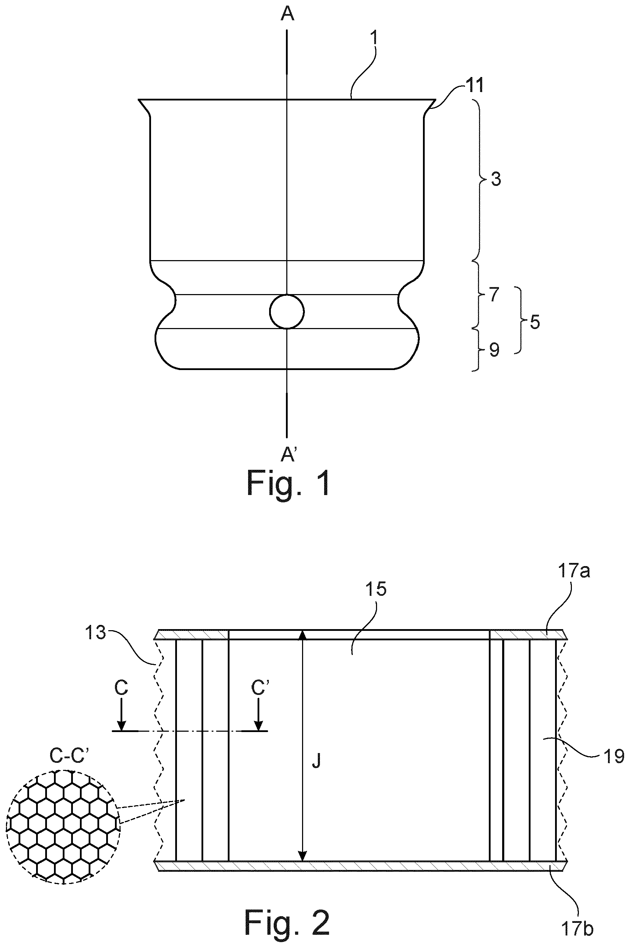

L'insert 1 représenté en figure 1 comporte un corps cylindrique 3 qui est surmonté par une extrémité évasée à rebord 11 et qui est prolongé à l'autre extrémité par une queue d'accroche 5. Le corps cylindrique 3 présente un axe de révolution A-A' (visible en figure 1).

L'insert 1 est réalisé en une seule pièce et en matière métallique offrant un bon compromis entre le coût de la pièce et de bonnes caractéristiques mécaniques notamment en termes de tenue. La matière peut être par exemple un alliage d'aluminium.

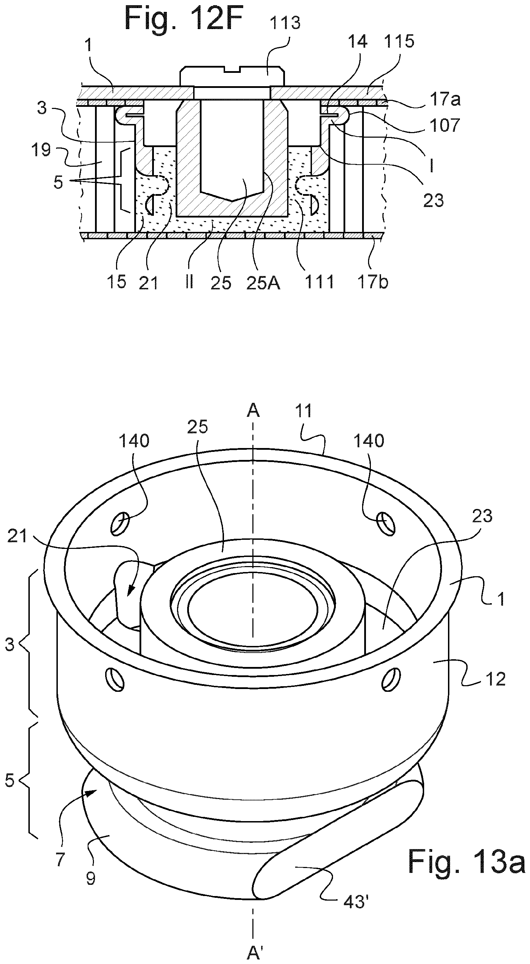

L'insert 1 est destiné à être inséré dans un trou 15 préalablement formé dans un panneau sandwich 13, tel que représenté en figure 2, de manière à pouvoir fixer au panneau sandwich 13 un élément 115. Un exemple d'élément 115 réalisé sous la forme d'une plaque est représenté figure 12F.

Dans cette figure 2, le panneau sandwich 13 comporte à titre d'exemple, une âme en nid d'abeille 19. L'âme en nid d'abeille 19 illustrée dans cette figure 2 est intercalée entre deux peaux, une peau dite de surface 17a et une peau dite de fond 17b. Les nids d'abeilles, comparable aux alvéoles d'abeille, sont par exemple en aluminium ou en papier carton ou en matière plastique synthétique, selon la résistance en flexion et la capacité de déformation souhaitée. Les peaux 17a et 17b de part et d'autre de l'âme en nid d'abeille 19, sont par exemple formées à base de résine et de fibre de verre et ce sont elles qui confèrent au panneau sandwich 13 sa résistance mécanique.

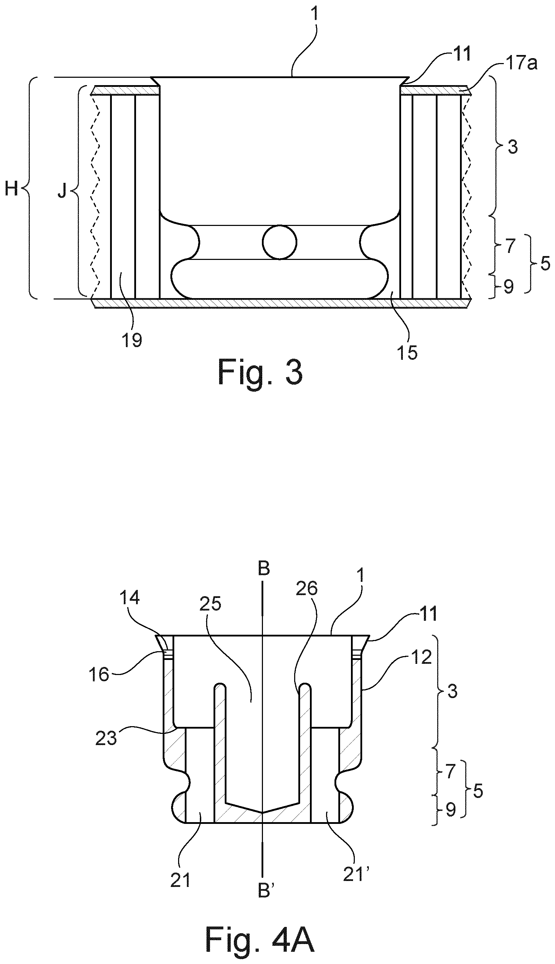

La profondeur J (représentée en figure 3) du trou 15 formé dans le panneau sandwich 13 correspond par exemple à l'épaisseur comprenant l'âme en nid d'abeille 19 et la peau de surface 17a du panneau sandwich 13. Le trou 15 réalisé est borgne c'est à dire non traversant. En outre, le trou 15 présente un diamètre sensiblement égal au diamètre du corps cylindrique 3 de l'insert 1 de manière à réaliser un montage serré de l'insert 1 dans le trou 15 du panneau sandwich 13 tel que représenté en figure 3.

Comme on le voit sur la figure 3, la hauteur totale H de l'insert 1 s'étendant de l'extrémité évasée à rebord 11 à l'extrémité de la queue d'accroche 5 située du côté opposé, est par exemple choisie de manière que lorsque l'insert 1 est positionné dans le trou 15 du panneau sandwich 13, seule l'extrémité évasée à rebord 11 dépasse de la peau de surface 17a du panneau sandwich 13. La hauteur totale H de l'insert 1 est supérieure à la profondeur J du trou 15 formé dans le panneau sandwich 13.

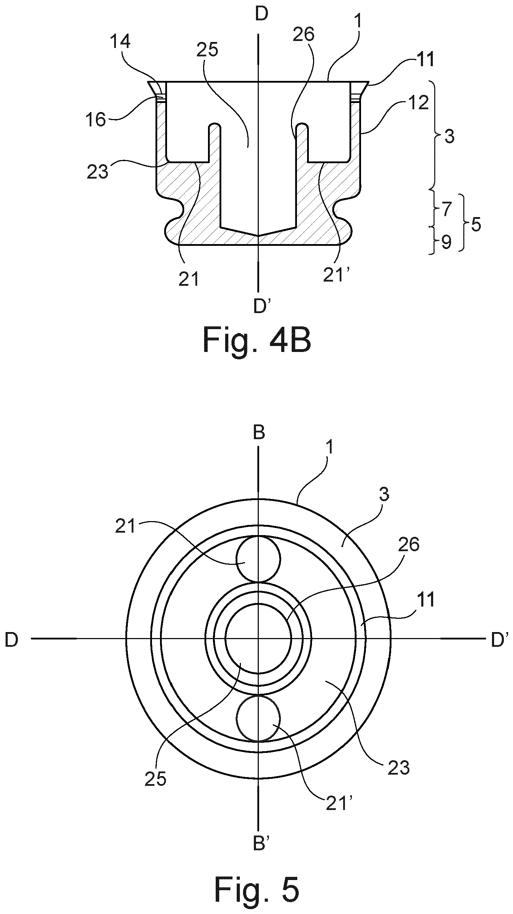

La figure 4A et la figure 4B sont des vues schématiques en coupe transversale selon des plans de coupe B-B' et D-D' respectivement, de l'insert 1 (visible sur la figure 5).

Comme on peut le voir sur les figures 4A et 4B, le corps cylindrique 3 est creux tandis que la queue d'accroche 5 dans le prolongement dudit corps cylindrique 3, est pleine du matériau composant l'insert 1. Le corps cylindrique 3 présente un fond transversal 23 à l'extrémité opposée au rebord 11, séparant ledit corps cylindrique 3 de la queue d'accroche 5.

Comme on peut mieux le voir sur les figures 4A et 4B montrant des plans de coupes perpendiculaires, le corps cylindrique 3 de l'insert 1 comporte un fond transversal 23 parallèle au rebord 11 et une paroi périphérique déformable 12 cylindrique. Un tube interne 25 fait saillie du fond transversal 23 à l'intérieur de la paroi périphérique déformable 12. Le tube interne 25, le corps cylindrique 3 et la queue d'accroche 5 sont coaxiaux.

Le tube interne 25 traverse le fond transversal 23 du corps cylindrique 3 et la queue d'accroche 5. Le tube interne 25 borgne ne traverse pas totalement la queue d'accroche 5.

La queue d'accroche 5 de l'insert 1 illustrée aux figures 4A et 4B, comprend au moins une gorge circonférentielle 7 et au moins une nervure périphérique 9.

La gorge circonférentielle 7 et la nervure périphérique 9 présentent chacune un profil transversal arrondi en particulier des profils transversaux semi-circulaires permettant d'adoucir le profil transversal de l'insert 1.

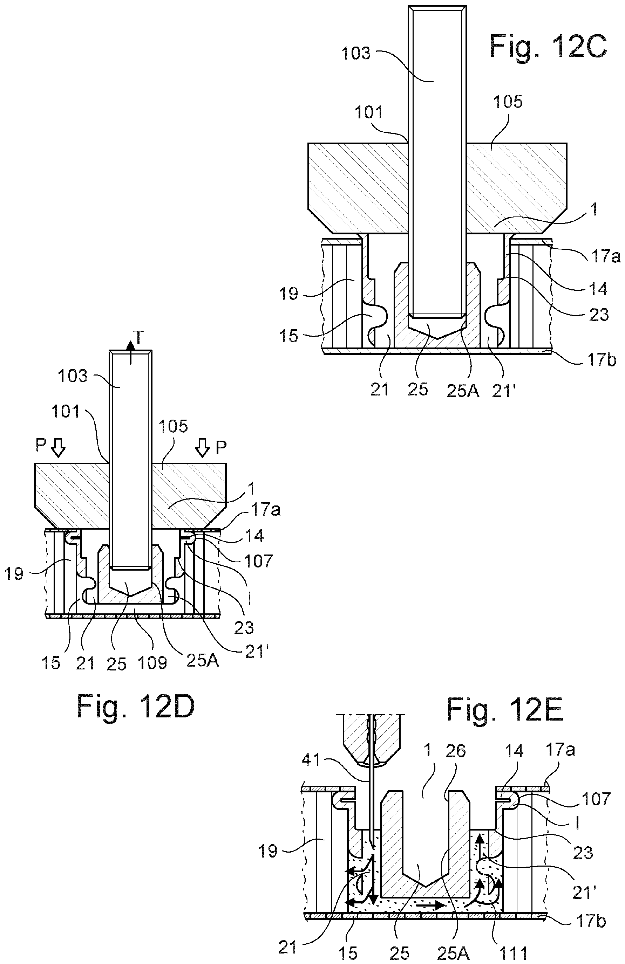

La gorge circonférentielle 7 et la nervure périphérique 9 de ladite queue d'accroche 5 composent l'extrémité libre de l'insert 1. Cette extrémité libre de l'insert 1 est configurée pour pouvoir coopérer avec une substance durcissable 111 lorsqu'elle est injectée dans le trou 15 du panneau sandwich 13 (visible en figures 12E et 12F).

Les profils arrondis de la gorge circonférentielle 7 et de la nervure périphérique 9 permettent d'adoucir le contour de la queue d'accroche 5 afin de limiter les concentrations des contraintes dans la substance durcissable 111 injectée entre l'extrémité libre de l'insert 1 et le trou 15 du panneau sandwich (visible en figures 12E et 12F) afin d'éviter l'apparition de fissures, sources de cassures dans la substance durcissable 111. La forme adoucie du contour de l'extrémité libre de l'insert 1 permet ainsi d'augmenter sa coopération avec la substance durcissable 111 injectée dans le trou 15 du panneau sandwich 13, ceci face aux diverses contraintes mécaniques subie par l'assemblage. La forme arrondie de la queue d'accroche 5 confère à l'insert 1 assemblé dans le panneau sandwich 13 une résistance à l'arrachement entre 1500 et 3000 Newton.

La queue d'accroche 5, dans le prolongement du corps cylindrique 3, présente une forme générale cylindrique.

L'au moins une gorge circonférentielle 7 de cette queue d'accroche 5 de forme générale cylindrique présente un fond arrondi. Ainsi, la queue d'accroche 5, de par sa forme arrondie, présente une surface de répartition de l'effort ou surface d'appui augmentée par rapport aux solutions à contours tranchants notamment en forme de sapin.

Le diamètre de la queue d'accroche 5 au niveau de la nervure périphérique 9 est inférieur ou égal au diamètre du corps cylindrique 3, ceci permettant d'obtenir un montage stable et serré de l'insert 1 dans le trou 15 du panneau sandwich 13. Cette différence de diamètre permet la cohésion de la substance durcissable 111 avec les parois latérales adoucies de la nervure périphérique 9 accessibles.

Les profils transversaux de la gorge circonférentielle 7 et de la nervure périphérique 9 se succèdent de manière continue et sans transition brusque, ceci afin d'éviter toute aspérité sur le contour de la queue d'accroche 5.

L'insert 1 est par exemple configuré pour que seule la portion de la paroi périphérique déformable 12 comprise entre une extrémité ouverte 26 du tube interne 25, située du côté opposé à la queue d'accroche 5, et l'extrémité évasée à rebord 11 de l'insert 1 se déforme lors de l'assemblage au panneau sandwich 13.

La paroi périphérique déformable 12 peut comporter en outre au moins une zone de faiblesse 14 (représentée aux figures 4A, 4B, 7 et 12E à 12F). La zone de faiblesse 14 forme une amorce favorisant et localisant la déformation de la paroi périphérique déformable 12.

La zone de faiblesse 14 est par exemple formée par une rainure 16 au moins partiellement continue dans la circonférence interne de la paroi périphérique déformable 12, de profondeur par exemple comprise entre 0,1 et 0,3mm.

En alternative, la paroi périphérique déformable 12 peut comporter un nombre prédéfini de points de faiblesse régulièrement répartis angulairement.

Selon une variante illustrée sur la figure 13a, la paroi périphérique déformable 12 présente au moins deux, de préférence au moins trois, orifices 140. Dans l'exemple non limitatif de la figure 13a quatre orifices 140 formant des points de faiblesse sont représentés.

Les orifices 140 ménagés sur la paroi périphérique déformable 12 sont équidistants. Autrement dit, ces orifices 140 sont régulièrement répartis angulairement. Par exemple, on peut prévoir deux orifices 140 diamétralement opposés, trois orifices 140 tous les 120°, quatre orifices 140 tous les 90°, et ainsi de suite.

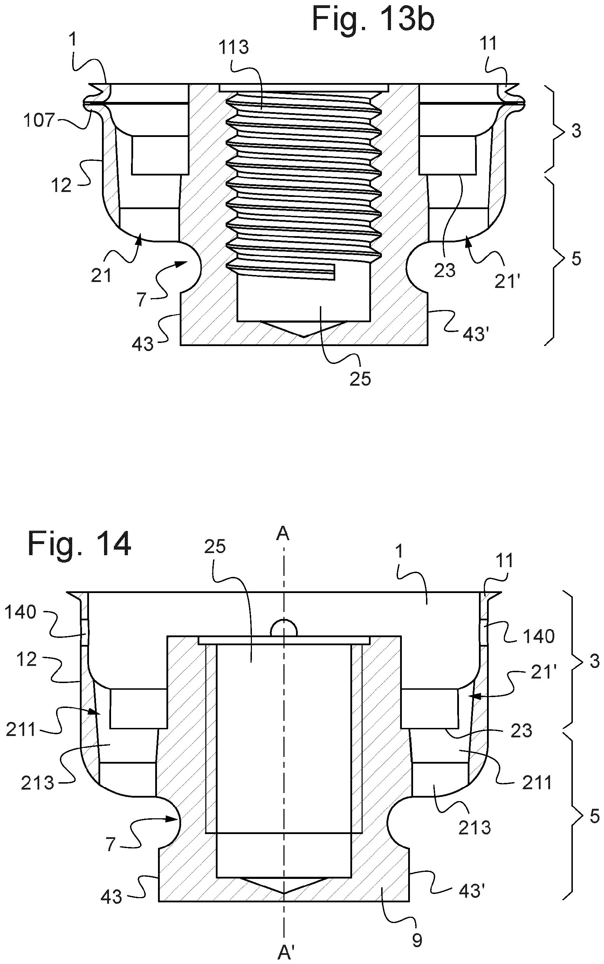

De plus, les orifices 140 sont avantageusement disposés sur la paroi périphérique déformable 12 dans un même plan perpendiculaire à l'axe de révolution A-A' du corps cylindrique. Tous les orifices 140 sont donc positionnés à une même hauteur suivant l'axe de révolution A-A'. Dans l'exemple de la figure 13, les orifices 140 sont disposés à proximité et à une même distance de l'extrémité évasée à rebord 11.

Les orifices 140 sont réalisés de façon identique. Le diamètre de tels orifices 140 peut être adapté selon les besoins et les contraintes.

De tels orifices 140 permettent d'éviter, lorsque l'on vient déformer la paroi périphérique déformable 12 pour former le sertissage (comme montré sur la figure 13b), que cette déformation ne se fasse de manière aléatoire et permet ainsi d'éviter d'éventuels problèmes de perpendicularité de l'insert 1 qui découleraient d'un sertissage aléatoire. Un tel sertissage, de sorte que la paroi périphérique déformable 12 forme un bourrelet radial 107 annulaire derrière l'extrémité évasée à rebord 11 de l'insert 1 pénétrant la peau de surface du panneau sandwich, est décrit plus en détail par la suite. Sur la figure 13b, la peau de surface du panneau sandwich a été enlevée pour faciliter la lecture et la compréhension de cette figure.

La distance entre le tube interne 25 et l'extrémité évasée à rebord 11 de l'insert 1 non déformé est dimensionnée de sorte qu'à l'état assemblé dans le trou 15 du panneau sandwich 13, tel que représenté plus loin en figure 12E, le tube interne 25 affleure l'extrémité évasée à rebord 11 de l'insert 1.

L'extrémité évasée à rebord 11 présente une forme annulaire tronconique facilitant la pénétration de l'insert 1 dans la peau de surface 17a du panneau sandwich 13.

Selon la figure 4A, la queue d'accroche 5 de l'insert 1 comporte au moins un premier 21 canal et un deuxième 21' canal parallèles à l'axe de révolution du corps cylindrique 3 (l'axe A-A'). Lesdits premier 21 et deuxième 21' canaux sont réalisés par exemple par perçage. Ils peuvent être ménagés au travers de la gorge circonférentielle 7 et de la nervure périphérique 9.

Lesdits canaux 21 et 21' débouchent dans la gorge circonférentielle 7 et au travers de la nervure périphérique 9.

Selon une autre alternative, les canaux 21, 21' peuvent déboucher dans la gorge circonférentielle 7, sans être ménagés au travers de la gorge circonférentielle 7 et de la nervure périphérique 9 (comme schématisé dans les exemples des figures 13b, 14 et 16).

Le premier canal 21 et le deuxième canal 21' sont accessibles au travers du fond transversal 23 du corps cylindrique 3 creux.

Le tube interne 25 est borgne ce qui permet d'éviter un dépôt intempestif de substance durcissable 111 dans le taraudage interne 25A lors de l'assemblage au panneau sandwich 13 et permet d'obtenir une bonne liaison entre l'insert 1 et la vis 113 (visible en figure 12F). Le tube interne 25 présente une extrémité ouverte 26, opposée à l'extrémité borgne et accessible depuis le corps cylindrique 3.

Comme on peut mieux le voir en figure 5, les canaux 21 et 21' sont disposés de part et d'autre du tube interne 25 afin de permettre l'expulsion de l'air comprimé dans le trou 15 du panneau sandwich 13 (visibles en figure 2), lors du remplissage en substance durcissable 111 d'une zone dégagée 109 représentée plus loin en figure 12D, entre l'insert 1 et le fond du trou 15 du panneau sandwich 13. Dans cette figure 5, la circonférence du corps cylindrique 3 et la circonférence du rebord évasé 11 sont visibles, tout comme le fond transversal 23 traversé par les premier et deuxième canaux 21 et 21' ainsi que par le tube interne 25. La nervure périphérique 9 de la queue d'accroche 5, présentant un diamètre inférieur ou égal au diamètre du corps cylindrique 3, n'est donc pas visible sur la figure 5.

Lesdits canaux 21 et 21' de la queue d'accroche 5 présentent chacun un diamètre compris entre 1 et 3 millimètres.

Le premier canal 21 est configuré pour recevoir un embout d'une aiguille d'injection 41 représenté plus loin en figure 12E. Le premier canal 21 est aussi nommé canal d'injection.

Lors de la pose de l'insert 1, un surplus de la substance durcissable 111 injectée peut ressortir par le deuxième canal 21' qui fait également office de canal d'évent.

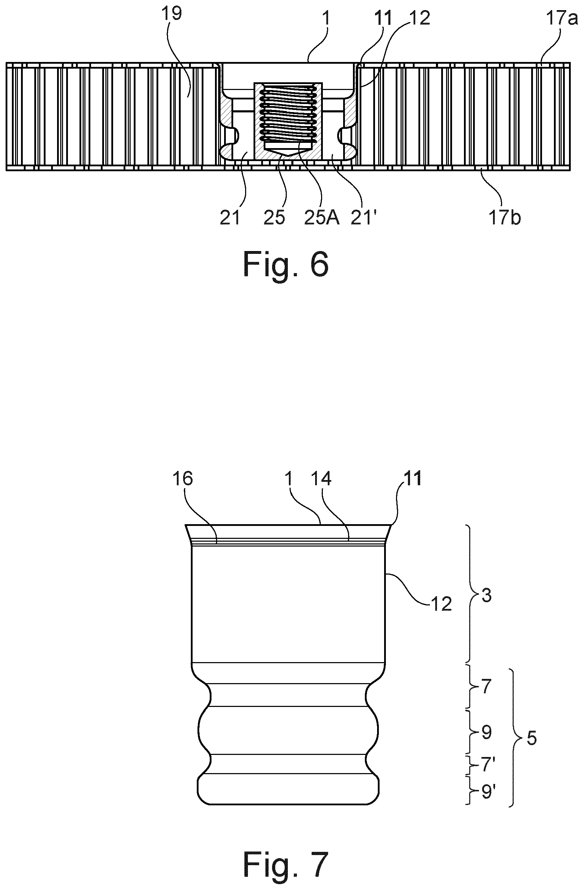

Comme on peut le voir sur la figure 6, le taraudage 25A du tube interne 25 permet la coopération avec un outil de pose 101 (visible aux figures 12C et 12D) utilisé pour assembler l'insert 1 dans le trou 15 du panneau sandwich 13. Le taraudage interne 25A est également configuré pour coopérer avec un organe de fixation tel qu'une vis 113 (visible sur la figure 12F), conçue pour fixer un élément 115 (également visible en figure 12F) au panneau sandwich 13.

Selon un premier mode de réalisation de l'insert 1, représenté en figure 7, l'insert 1 comporte deux gorges circonférentielles 7 et deux nervures périphériques 9 se succédant par alternance. Cette alternance permet d'augmenter la coopération entre la queue d'accroche 5 et la substance durcissable 111 dans le trou 15 du panneau sandwich 13 une fois l'insert 1 assemblé dans ledit trou 15. Le nombre de gorges circonférentielles 7 et le nombre de nervures périphériques 9 tout comme leur épaisseur sont choisis en fonction de la profondeur J du trou 15 du panneau sandwich 13 dans lequel l'insert 1 est assemblé.

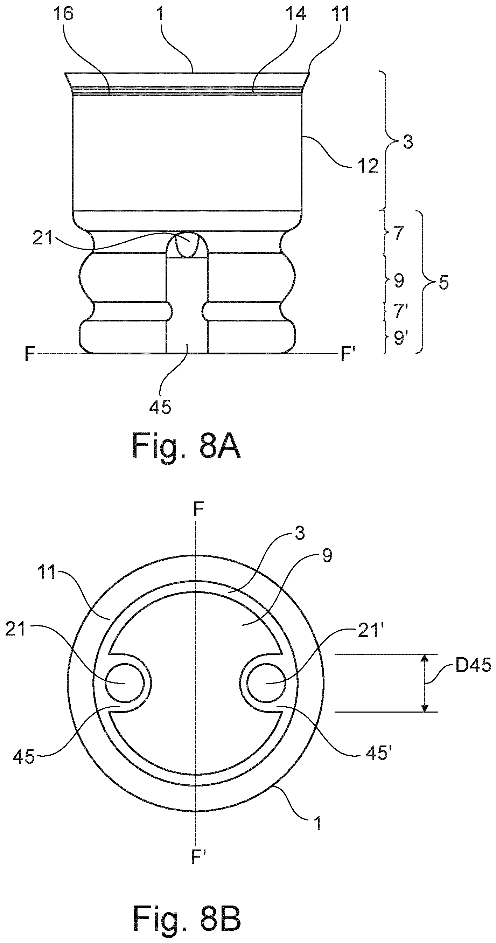

Dans un deuxième mode de réalisation de l'insert 1, représenté en figure 8A, les nervures périphériques 9 et 9' et les gorges circonférentielles 7 et 7' de la queue d'accroche 5 dudit insert 1 sont interrompues par le premier canal 21 et le deuxième 21' canal de manière à ce que lesdits premier et deuxième canaux 21 et 21' sont ouverts radialement vers l'extérieur au niveau d'ouvertures radiales 45 et 45'. Les ouvertures radiales 45 et 45' sont illustrées sur la figure 8B selon le plan de coupe transversal F-F' de la figure 8A. Lesdites ouvertures radiales 45 et 45' présentent un diamètre D45 compris entre 3 et 6 mm, favorisant le passage de substance durcissable 111 entre l'insert 1 et le trou 15 du panneau sandwich 13. De plus, les ouvertures radiales 45 et 45' des premier et deuxième canaux 21 et 21' permettent d'éviter la rotation de l'insert 1 une fois assemblé dans ledit trou 15 du panneau sandwich 13.

Le deuxième canal 21' peut être identique ou non au premier canal 21.

Selon un aspect avantageux, au moins l'un des canaux, est au moins en partie conique ou tronconique. De préférence au moins le premier canal 21 est au moins en partie conique ou tronconique.

Selon un mode de réalisation illustré sur la figure 14, les deux canaux 21 et 21' sont au moins en partie conique ou tronconique.

Plus précisément, les canaux 21, 21' peuvent présenter respectivement une première portion conique ou tronconique 211 et une deuxième portion cylindrique 213.

La première portion tronconique 211 est ménagée au moins dans le corps cylindrique 3. Elle peut également être ménagée partiellement dans la queue d'accroche 5 au-delà du fond transversal 23. La deuxième portion cylindrique 213 quant à elle est ménagée dans la queue d'accroche 5 dans la continuité de la première portion tronconique 211.

Les canaux 21, 21' peuvent être réalisés par un perçage conique ou tronconique au début pour former la première portion tronconique 211 puis par un perçage droit à la fin au niveau de la queue d'accroche 5, pour former la deuxième portion cylindrique 213.

La forme conique ou tronconique, du canal d'injection 21 notamment, au moins au niveau du corps cylindrique 3 de l'insert 1, permet de faciliter le positionnement et le centrage de l'aiguille d'injection, d'assurer un meilleur contact et d'éviter d'abîmer cette aiguille, en particulier en cas d'automatisation, ce qui risquerait de dégrader l'étanchéité.

Dans l'exemple de la figure 14, les deux canaux 21, 21' sont identiques, de même forme et de même diamètre, offrant des facilités d'usinage et gain de coût.

En alternative, les canaux 21, 21' peuvent être de diamètres différents.

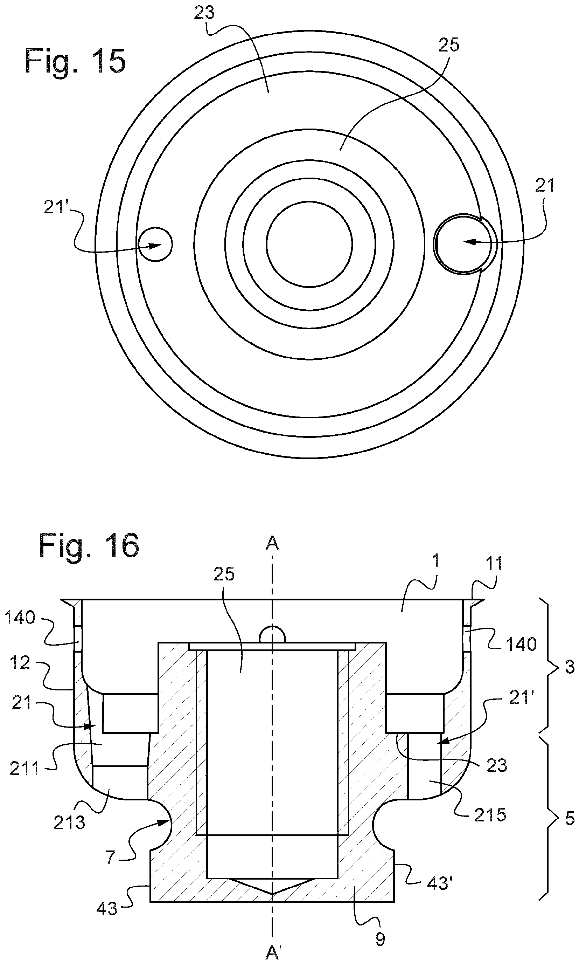

Selon un mode de réalisation représenté sur les figures 15 et 16, les deux canaux 21 et 21' ne sont pas identiques et peuvent être de diamètres différents.

Le premier canal 21 peut être identique à l'exemple de la figure 14 et n'est pas décrit de nouveau. Le deuxième canal 21' peut être d'une autre forme que conique ou tronconique.

Le deuxième canal 21' est par exemple cylindrique. Il peut présenter une unique portion cylindrique 215 réalisée par exemple par perçage droit non fraisé.

Le deuxième canal 21' présente un diamètre inférieur à celui du premier canal 21, en particulier au diamètre minimal de la forme ou portion tronconique 211, qui correspond ici au diamètre de la portion cylindrique 213 du premier canal 21. À titre d'exemple, le diamètre minimal du premier canal 21 peut être entre 2mm et 3mm, tandis que le diamètre du deuxième canal 21' peut être inférieur à 2mm.

Cela crée un étranglement permettant de ralentir le flux de la substance durcissable telle que de la colle, de sorte qu'une pression plus forte peut être exercée au sein du panneau, favorisant la répartition de cette substance durcissable et en évitant des inclusions d'air. Autrement dit, cet étranglement génère un bouchon empêchant que la substance durcissable telle que de la colle ne remonte trop rapidement de l'autre côté pour sortir par le deuxième canal 21', avant qu'elle n'ait pu se répandre sur toute la périphérie de l'insert 1.

À l'inverse, selon une variante non illustrée, le deuxième canal 21' peut présenter un diamètre supérieur à celui du premier canal 21, en particulier au diamètre maximal de la forme tronconique, pour éviter au contraire un tel bouchon et faciliter que la substance durcissable puisse remonter à travers le deuxième canal 21', ce qui peut être avantageux notamment lorsque la substance durcissable présente une forte viscosité.

Par ailleurs, dans les exemples des figures 14 et 16, les canaux 21 et 21' ne sont pas ménagés au travers de la gorge circonférentielle 7 et de la nervure périphérique 9. Une telle variante non représentée est également envisageable et applicable au mode de réalisation avec les canaux 21 et 21' dont au moins un est tronconique, de façon similaire aux exemples décrits en référence aux figures 4A, 6, 8A, 10A, 12B à 12F.

Enfin, la description des canaux 21 et 21' est faite par rapport à une queue d'accroche 5 dont les contours sont arrondis comme précédemment décrit et illustré sur les figures. Bien entendu, la description des canaux 21 et 21' déportés, et dont au moins un est avantageusement tronconique, s'applique également pour une variante d'insert (non représentée) dont la queue d'accroche présenterait au moins une aspérité pour pouvoir coopérer avec la substance durcissable, comprenant par exemple au moins une dent tronconique, de sorte que la queue d'accroche présente une forme de sapin.

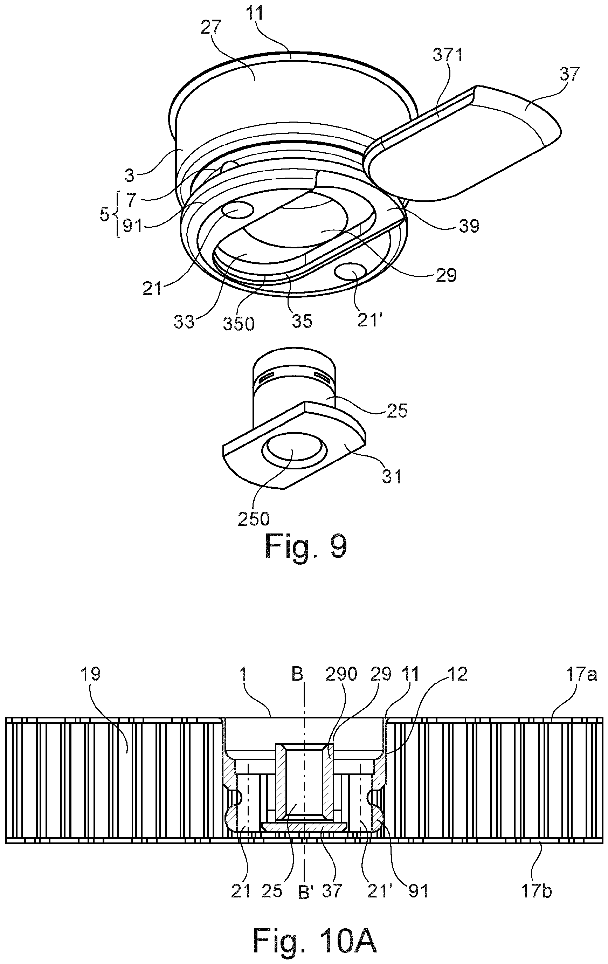

Selon un troisième mode de réalisation de l'insert 1 illustré sur la figure 9, ledit insert 1 selon l'invention comporte trois pièces assemblées les unes avec les autres, comprenant un organe d'encastrement 27, un tube interne 25 et un capot 37. Ledit insert 1 « trois pièces » peut être réalisé par exemple en acier. L'insert 1 dit « trois pièces » selon ce troisième mode de réalisation est représenté en figure 9.

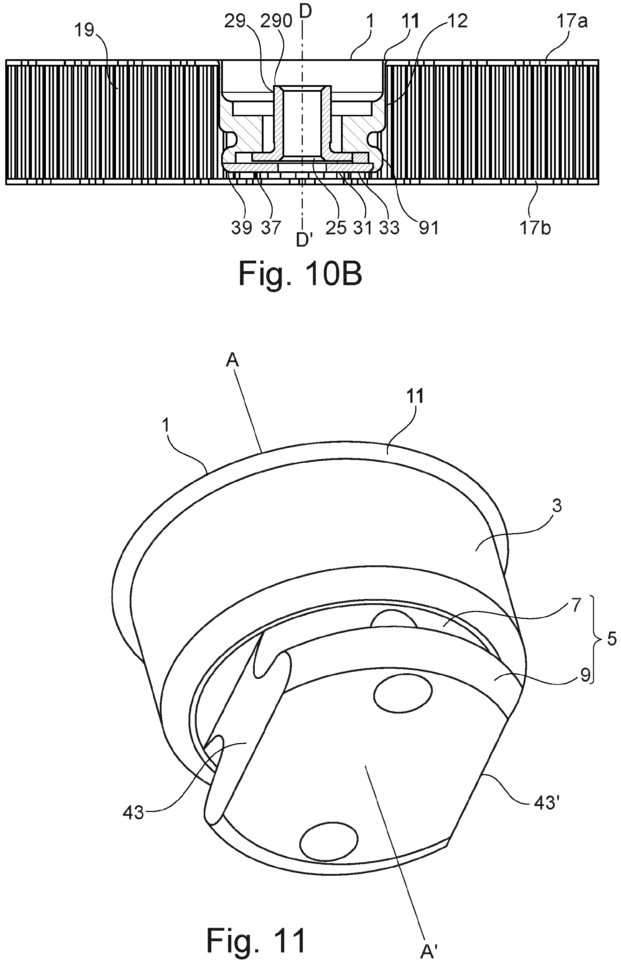

L'organe d'encastrement 27 est destiné à être assemblé dans le trou 15 du panneau sandwich 13 (représenté plus loin aux figures 10A et 10B) et comprend le corps cylindrique 3 et la queue d'accroche 5 séparés l'un de l'autre par le fond transversal 23 dudit corps cylindrique 3. La queue d'accroche 5 comporte un conduit interne 29 coaxial avec le corps cylindrique 3 et communicant avec un creux interne 33 de forme oblongue disposé dans l'extrémité libre de la queue d'accroche 5 appelée nervure périphérique extrémale 91. Le creux interne 33 est accessible au travers d'une ouverture 35 de forme oblongue et présente à la surface de la nervure périphérique extrémale 91.

L'ouverture 35 de la nervure périphérique extrémale 91 est configurée pour pouvoir insérer la deuxième pièce de l'insert 1 « trois pièces » d'une part dans le creux interne 33 de la nervure périphérique 91 et d'autre part dans le conduit interne 29 de la queue d'accroche 5.

Le tube interne 25 est solidaire d'un pied transversal 31 à l'une de ses extrémités. Le tube interne 25 est configuré pour être inséré dans le conduit interne 29 de la queue d'accroche 5 et le pied transversal 31 est configuré pour être logé dans le creux interne 33 de la nervure périphérique extrémale 91. Le pied transversal 31 permet de limiter les mouvements du tube interne 25 lorsqu'il est inséré dans le conduit interne 29. Ledit pied transversal 31 présente un orifice 250 sur sa surface, permettant l'accès au tube interne 25 visible en figure 9.

Dans cette même figure 9, le tube interne 25 présente par exemple sur sa surface externe, deux points de déformation dits « poinçons » 28 et 28', obtenus par poinçonnage dudit tube interne 25. Les déformations 28 et 28' ainsi réalisées sur ledit tube interne 25 permettent de déformer le taraudage 25A à l'intérieur du tube interne 25 et de former aussi un frein filet mécanique pour éviter le desserrage de la vis ou de la tige filetée 113 coopérante avec l'insert 1 (illustré en figure 12F) selon le mode de réalisation « trois pièces ».

Le capot 37 est configuré pour fermer l'ouverture 35 de la surface de la nervure périphérique extrémale 91. Ledit capot 37 permet d'emprisonner le tube interne 25 solidaire du pied 31 dans la queue d'accroche 5. Dans le mode de réalisation, le capot 37 présente une forme oblongue pouvant être réalisé en matière plastique ou dans un alliage d'aluminium ou encore dans la même matière métallique composant l'organe d'encastrement 27.

Le pied transversal 31 présente des dimensions inférieures aux dimensions du creux interne 33 de manière à ce que le montage ne soit pas serré, ceci afin de permettre un certain degré de liberté supplémentaire de l'assemblage.

L'insert 1 selon le mode de réalisation trois pièces est comparable à un insert « flottant » permettant d'éviter l'hyperstatisme lors du montage dans le trou 15 du panneau sandwich 13.

Le capot 37 présente une forme oblongue correspondante à l'ouverture 35 de la nervure périphérique extrémale 91. L'ouverture 35 comporte une entrée latérale 39 permettant l'insertion dudit capot 37 au niveau de l'un des angles arrondis de ladite ouverture 35.

Cette même ouverture 35 comporte des bords circonférentiels de guidage 350 de forme complémentaire à la bordure périphérique 371 du capot 37. La complémentarité de forme entre les bords circonférentiels de guidage 350 et de la bordure périphérique 371 permet le coulissement du capot 37 dans l'ouverture 35 au travers de l'entrée latérale 39.

La fermeture de l'ouverture 35 par le coulissement du capot 37 alors illustrée en figure 9, est présentée seulement à titre d'exemple et de manière non limitative. La disposition du capot 37 sur l'ouverture 35 pourrait être réalisée par tout autre moyen comme par exemple des clips.

L'assemblage de l'insert 1 « trois pièces » dans le trou 15 d'un panneau sandwich 13 est illustré aux figures 10A et 10B. Les figures 10A et 10B, représentent des vues en coupe transversale de l'insert 1 « trois pièces » assemblé dans le trou 15 d'un panneau sandwich 13 respectivement selon les plans de coupes B-B' et D-D'. Dans ces figures 10A et 10B, le capot 37 referme l'ouverture 35 de la nervure périphérique extrémale 91 permet d'emprisonner le tube interne 25 dans le conduit interne 29. Le conduit interne 29 présente des dimensions supérieures à celles du tube interne 25, l'assemblage permet l'obtention de degrés de liberté supplémentaires et d'éviter l'hyperstatisme lors du montage de l'insert 1 dans le trou 15 d'un panneau sandwich 13.

Dans la figure 10A, les parois du premier 21 canal et du deuxième 21' canal de la queue d'accroche 5 sont visibles tout comme le capot 37 dans sa largeur. Dans cette figure, le pied transversal 31 solidaire du tube interne 25 n'est pas visible.

A l'inverse, dans la figure 10B, les parois du premier 21 canal et du deuxième 21' canal de la queue d'accroche 5 ne sont pas visibles. Dans cette figure, le pied transversal 31 solidaire du tube interne 25 est visible tout comme le capot 37 mais dans sa longueur. Dans cette figure 10B, on peut également apercevoir l'entrée latérale 39 par laquelle le capot 37 a été introduit par coulissement dans l'ouverture 35.

Dans ces figures 10A et 10B, le tube interne 25 ainsi que son taraudage interne 25A sont accessibles depuis le creux du corps cylindrique 3.

Selon un quatrième mode de réalisation illustré en figure 11, les profils transversaux semi-circulaires de la gorge circonférentielle 7 et de la nervure périphérique 9 de la queue d'accroche 5 sont interrompus par au moins une découpe 43, parallèle à l'axe de révolution A-A' de l'insert 1.

Dans l'exemple de la figure 11, la découpe 43 est obtenue par exemple par fraisage de la queue d'accroche 5, selon un plan de découpe parallèle à un plan défini par le premier canal 21 et le deuxième canal 21'. Ladite découpe 43 est éloignée dudit plan défini par le premier canal 21 et le deuxième canal 21', ceci afin de permettre à la queue d'accroche 5 de conserver une circonférence arrondie suffisamment importante pour pouvoir coopérer avec la substance durcisssable 111 et éviter la concentration des contraintes entraînant des fissures dans cette même substance durcissable 111.

Par exemple, on peut prévoir deux découpes 43, 43' diamétralement opposées. La deuxième découpe 43' est réalisée de façon similaire à la première découpe 43.

Selon une variante visible sur les figures 14 et 16, la ou les découpes 43, 43' sont obtenues selon un plan de découpe perpendiculaire au plan défini par le premier canal 21 et le deuxième canal 21'.

De plus, selon l'une ou l'autre de ces variantes, la découpe 43, 43' permet d'éviter la rotation de l'insert 1 une fois assemblé dans le trou 15 d'un panneau sandwich 13 alors rempli de substance durcissable 111. La ou les découpes 43, 43' forment ainsi des plats ou méplats anti-rotation.

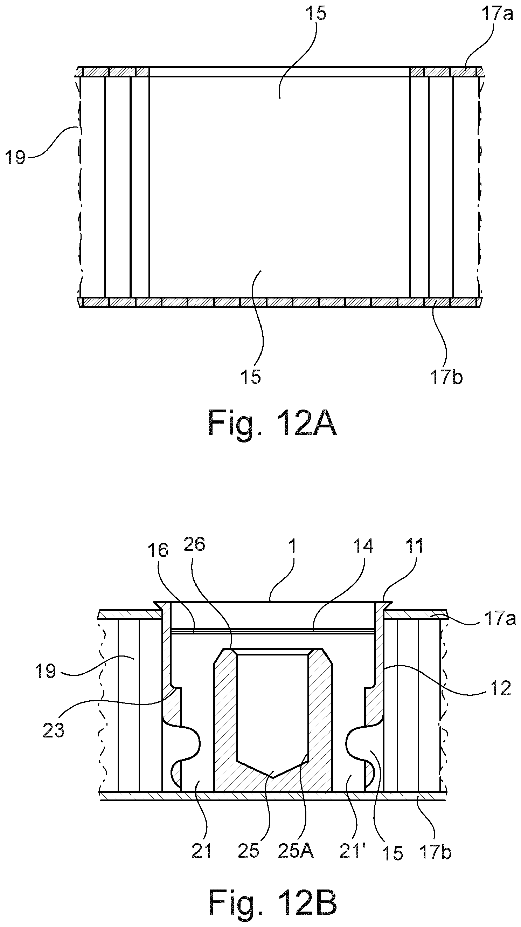

Nous allons maintenant décrire les différentes étapes du procédé d'assemblage de l'insert 1 selon l'invention dans un panneau sandwich 13, en référence aux figures 12A, 12B, 12C, 12D, 12E, 12F.

Dans une première étape, on forme un trou 15 non traversant dans le panneau sandwich 13 de diamètre correspondant au diamètre du corps cylindrique 3 de l'insert 1 (Figure12A).

Dans une deuxième étape, l'insert 1 est positionné par pression axiale dans le trou 15, de manière à ce que l'extrémité évasée à rebord 11 de l'insert 1 soit légèrement au-dessus de la peau de surface 17a du panneau sandwich 13 (Figure 12B).

Dans une troisième étape (Figure 12C), on positionne l'outil de pose 101 sur l'extrémité évasée à rebord 11 de l'insert 1. L'outil de pose 101 comprend un embout 105 et un organe fileté mâle 103. L'outil de pose 101 est positionné par rapport à l'insert 1 de manière à ce que l'embout 105 prenne appui sur l'extrémité évasée à rebord 11 de l'insert 1 et de manière à visser l'organe fileté mâle 103 de l'outil de pose 101 dans le tube interne 25 sans déboucher.

Dans une quatrième étape (figure 12D), on exerce une pression axiale sur l'extrémité évasée à rebord 11 de l'insert 1 à l'aide de l'embout 105 de l'outil de pose 101, représentée par les flèches P, de manière à faire pénétrer l'extrémité évasée à rebord 11 de l'insert 1 dans la peau de surface 17a du panneau sandwich 13. Simultanément, on tire le tube interne 25 à l'aide de l'organe fileté mâle 103 dans la direction opposée à la direction de la pression axiale P, représentée par la flèche T. L'extrémité évasée à rebord 11 retenant l'insert 1 à la peau de surface 17a permet la déformation de la paroi périphérique déformable 12.

La portion de la paroi périphérique déformable 12 forme alors un bourrelet radial 107 annulaire sur le pourtour du trou 15 dans le nid d'abeille de l'âme 19 derrière la peau de surface 17a du panneau sandwich 13, formant ainsi une première zone de connexion mécanique 1 entre l'insert 1 et le panneau sandwich 13. A la fin de cette étape de montage, l'extrémité évasée à rebord 11 de l'insert 1 et l'extrémité du tube interne 25 affleurent la surface du panneau sandwich 13. A l'issue de cette quatrième étape, la hauteur totale H de l'insert 1 est donc réduite.

Le rétrécissement de l'insert 1 provoque également la création de la zone dégagée 109 entre l'extrémité de la queue d'accroche 5 et le fond du trou 15 du panneau sandwich 13.

Puis, l'outil de pose 101 est désolidarisé de l'insert 1 par dévissage de l'organe fileté mâle 103.

Dans une cinquième étape, on injecte la substance durcissable 111 directement au travers du premier canal 21 de la queue d'accroche 5 alors accessible depuis le creux du corps cylindrique 3. L'injection de ladite substance 111 est réalisée par l'utilisation d'une aiguille d'injection dont l'embout 41 est représenté en figure 12E. L'injection au travers du premier canal 21 de la queue d'accroche 5 débouche par la gorge circonférentielle 7 et par la nervure périphérique 9 dans la zone dégagée 109 entre l'insert 1 et le fond du trou 15 du panneau sandwich 13.

Lorsque la zone dégagée 109 est remplie par la substance durcissable 111, cette dernière ressort au travers du deuxième canal 21' de la queue d'accroche. La substance durcissable 111 ressort au travers de l'ouverture de sortie du deuxième canal 21'dit de « trop plein » dans le fond transversal 23 du corps cylindrique 3. Le deuxième canal 21' sert également de « canal d'évent », permettant de chasser l'air comprimé entre l'insert et le trou 15 du panneau sandwich 13. L'expulsion de l'air permet d'éviter la formation de bulles d'air dans la zone dégagée 109 et fragilisant la coopération entre l'insert 1 et la substance durcisssable 111. Lorsque ladite substance durcissable 111 déborde au niveau de l'ouverture de sortie du deuxième canal de « trop plein » 21', l'injection est alors interrompue.

Dans une sixième étape, la substance durcissable 111 injectée dans l'étape précédente durcit dans la zone dégagée 109 ainsi que dans les canaux 21 et 21' de la queue d'accroche 5, ceci permettant l'accroche de la substance durcissable 111 sur la peau de fond 17b du panneau sandwich 13 de manière à former une deuxième zone de connexion mécanique II pour garantir une tenue optimale de l'assemblage et éviter la rupture cohésive de la substance durcissable 111.

L'élément structurel 115 peut alors être fixé au panneau sandwich 13 par l'intermédiaire d'une vis ou d'une tige filetée 113, ces éléments étant représentés en figure 12F. La vis ou la tige filetée 113 présente un filetage externe complémentaire au taraudage interne 25A du tube interne 25 et est insérée dans le tube interne 25 au travers de son extrémité ouverte 26.

Un frein filet mécanique (non représenté sur les figures) peut être disposé d'une part sur le taraudage interne 25A du tube interne 25 et d'autre part sur le filetage de la vis ou de la tige filetée 113, ceci permettant d'augmenter la tenue mécanique entre ledit tube interne 25 et la vis 113 afin d'éviter le desserrage de la vis 113 à l'insert 1 assemblé dans le panneau sandwich 13 (visible en figure 12F).

L'élément 115 fixé au panneau sandwich 13 est directement plaqué contre le panneau sandwich 13, évitant un éventuel défaut de stabilité de l'assemblage (visible figure 12F).

L'insert 1 ainsi réalisé permet un assemblage simplifié avec le panneau sandwich 13, présentant deux zones de connexion mécanique 1 et II, situées entre l'insert 1 et le trou 15 du panneau sandwich 13. Cet assemblage garantissant la fixation stable de l'élément 115 fixé au panneau sandwich 13 alors visible en figure 12F.

Les profils transversaux de la gorge circonférentielle 7 et de la nervure périphérique 9 permettent d'arrondir le profil transversal de la queue d'accroche 5 afin d'éviter la concentration de contraintes entraînant des fissures dans la substance durcissable 111 et altérant la deuxième zone de connexion Il entre l'insert 1 et le panneau sandwich 13.

L'injection de la substance durcissable 111 au travers d'un premier canal 21 dans la queue d'accroche 5 permet d'éviter la contamination intempestive du taraudage interne 25A du tube interne 25 par le dépôt de substance durcissable 111, assurant ainsi une meilleure tenue de la vis ou de la tige filetée 113 au panneau sandwich 13 et permet de pouvoir dévisser l'assemblage une fois la substance durcissable 111 ayant polymérisée. La sortie de substance durcissable 111 au travers de l'ouverture de sortie du deuxième canal 21' permet d'obtenir un remplissage homogène de la zone dégagée 109 et permet l'expulsion de l'air étant comprimé dans la zone dégagée 109 pouvant entraîner la formation de bulles d'air altérant la coopération entre la queue d'accroche 5 de l'insert 1 et la substance durcissable 111. Enfin, la sortie de substance durcissable 111 au travers de l'ouverture de sortie du deuxième canal 21' permet de pouvoir contrôler le niveau de remplissage en substance durcissable 111 injectée dans l'assemblage.

## Revendications

1. Insert (1) destiné à être assemblé dans un trou (15) d'un panneau sandwich (13), comprenant un corps cylindrique (3) creux ayant une extrémité à rebord (11) déformable par un outil de pose (101) permettant une connexion mécanique par déformation avec une peau de surface (17a) dudit panneau sandwich (13), ledit insert (1) comportant une queue d'accroche (5) dans le prolongement du corps cylindrique (3) ainsi qu'un tube interne (25) destiné à coopérer avec l'outil de pose (101), **caractérisé en ce que** :
- ladite queue d'accroche (5) présente au moins une gorge circonférentielle (7) et une nervure périphérique (9), la gorge circonférentielle (7) et la nervure périphérique (9) présentant chacune un profil transversal arrondi pour pouvoir coopérer avec une substance durcissable (111),
- le tube interne (25) est borgne,
- le corps cylindrique (3) présente à l'extrémité opposée au rebord (11) un fond transversal (23) le séparant de la queue d'accroche (5) et traversé par le tube interne (25), et
- ladite queue d'accroche (5) comporte au moins un premier canal et un deuxième canal (21 et 21') parallèles à l'axe de révolution (A-A') du corps cylindrique (3), lesdits premier et deuxième canaux (21 et 21') étant disposés de part et d'autre du tube interne (25) et débouchant d'une part dans la gorge circonférentielle (7) et d'autre part au travers dudit fond transversal (23).

2. Insert (1) selon la revendication précédente, **caractérisé en ce que** la queue d'accroche (5) présente une forme générale cylindrique dans le prolongement du corps cylindrique (3) et **en ce que** le diamètre de ladite queue d'accroche (5) au niveau de la nervure périphérique (9) est inférieur ou égal au diamètre du corps cylindrique (3).

3. Insert (1) selon l'une quelconque des revendications précédentes, **caractérisé en ce que** les profils transversaux de la gorge circonférentielle (7) et de la nervure périphérique (9) se succèdent de manière continue.

4. Insert (1) selon l'une quelconque des revendications précédentes, **caractérisé en ce que** la gorge circonférentielle (7) et la nervure périphérique (9) présentent des profils transversaux semi-circulaires.

5. Insert (1) selon l'une quelconque des revendications précédentes, **caractérisé en ce que** la queue d'accroche (5) comporte deux gorges circonférentielles (7 et 7') et deux nervures périphériques (9 et 9') se succédant par alternance.

6. Insert (1) selon l'une quelconque des revendications précédentes, **caractérisé en ce que** lesdits premier et deuxième canaux (21 et 21') sont ménagés au travers de ladite gorge circonférentielle (7) et de la nervure périphérique (9) et débouchent d'une part dans la gorge circonférentielle (7) et la nervure périphérique (9), et d'autre part au travers dudit fond transversal (23).

7. Insert (1) selon l'une des revendications précédentes, dans lequel :
- le premier canal (21) est au moins en partie conique ou tronconique et
- le deuxième canal (21') est au moins en partie conique ou tronconique, ou est cylindrique.

8. Insert (1) selon la revendication précédente, dans lequel les canaux (21, 21') sont de diamètres différents.

9. Insert (1) selon l'une des revendications 5 et 6, **caractérisé en ce que** les nervures périphériques (9 et 9') et les gorges circonférentielles (7 et 7') sont interrompues par le premier canal et le deuxième canal (21 et 21') et **en ce que** lesdits canaux présentent des ouvertures radiales (45 et 45') vers l'extérieur.

10. Insert (1) selon la revendication 4 en combinaison avec l'une quelconque des revendications précédentes, **caractérisé en ce que** les profils transversaux semi-circulaires de la gorge circonférentielle (7) et de la nervure périphérique (9) de la queue d'accroche (5) sont interrompus par au moins une découpe (43) parallèle à l'axe de révolution (A-A') et **en ce que** ladite découpe (43) est éloignée du premier canal (21) et du deuxième canal (21') de ladite queue d'accroche (5).

11. Insert (1) selon l'une quelconque des revendications précédentes, **caractérisé en ce que** ledit insert est réalisé en trois pièces :
- une première pièce comprenant un organe d'encastrement (27) avec le corps cylindrique (3) et la queue d'accroche (5) séparés l'un de l'autre par le fond transversal (23) du corps cylindrique (3), la queue d'accroche (5) comportant un conduit interne (29) coaxial avec le corps cylindrique (3) communicant avec un creux interne (33) de forme oblongue disposé dans une nervure périphérique extrémale (91) formant l'extrémité libre de la queue d'accroche (5), ledit creux interne (33) étant accessible par une ouverture (35) sur la surface de ladite nervure périphérique extrémale (91),
- une deuxième pièce comprenant le tube interne (25) solidaire d'un pied transversal (31) à l'une de ses extrémités, ledit tube interne (25) étant configuré pour être inséré dans le conduit interne (29) de la queue d'accroche (5) et le pied transversal (31) étant configuré pour se loger dans le creux interne (33) de la nervure périphérique extrémale (91),
- une troisième pièce comprenant un capot (37) configuré pour fermer ladite ouverture (35) de la nervure périphérique extrémale (91).

12. Insert (1) selon la revendication précédente, **caractérisé en ce que** le creux interne (33) présente des dimensions supérieures aux dimensions du pied transversal (31) solidaire du tube interne (25) et **en ce que** le diamètre du conduit interne (29) est inférieur ou égal à la largeur du creux interne (33) et supérieur au diamètre du tube interne (25), de manière à permettre des degrés de liberté supplémentaires.

13. Insert (1) selon la revendication 11, **caractérisé en ce que** l'ouverture (35) sur la surface de la nervure périphérique extrémale (91) présente une forme oblongue avec une entrée latérale (39) permettant l'insertion du capot (37) par coulissement.

14. Insert (1) selon l'une des revendications précédentes, dans lequel le corps cylindrique (3) de l'insert (1) comporte une paroi périphérique déformable (12) présentant au moins deux orifices équidistants.

15. Procédé d'assemblage d'un insert (1) selon l'une quelconque des revendications précédentes, dans un trou (15) d'un panneau sandwich (13) au moyen d'un outil de pose (101), **caractérisé en ce qu'**il comporte les étapes successives suivantes :
- on positionne l'insert (1) par pression axiale dans le trou (15) préalablement formé dans le panneau sandwich (13),
- on exerce par pression axiale sur l'extrémité évasée à rebord (11) de l'insert (1) à l'aide d'un embout (105) de l'outil de pose (101) pour faire pénétrer l'extrémité évasée à rebord (11) de l'insert (1) dans la peau de surface (17a) du panneau sandwich (13), et simultanément on tire le tube interne (25) à l'aide de l'outil de pose (101) de manière à déformer une portion d'une paroi périphérique déformable (12) du corps cylindrique (3) de l'insert (1) et former une première zone de connexion mécanique (1) entre l'insert (1) et le panneau sandwich (13), de sorte qu'en fin de montage, l'extrémité à rebord (11) de l'insert (1) et l'extrémité (26) du tube interne (25) viennent affleurer la surface du panneau sandwich (13),
- on injecte une substance durcissable (111) par l'ouverture (35) et au travers du premier canal (21) de la queue d'accroche (5),
- on interrompt l'injection lorsque la substance durcissable (111) est détectée dans le deuxième canal (21') à proximité du fond transversal (23) du corps cylindrique (3).

16. Assemblage comportant un insert (1) selon l'une quelconque des revendications 1 à 14 et un panneau sandwich (13).

## Patentansprüche

1. Einsatz (1) zum Einbau in einem Loch (15) eines Sandwichpanels (13), der einen hohlen zylinderförmigen Körper (3) mit einem Ende mit Rand (11) umfasst, der durch ein Einsetzwerkzeug (101) verformbar ist, wodurch eine mechanische Verbindung durch Verformung mit einer Oberflächenhaut (17a) des Sandwichpanels (13) ermöglicht wird, wobei der Einsatz (1) einen Verankerungsschaft (5) in der Verlängerung des zylinderförmigen Körpers (3) sowie ein Innenrohr (25) zur Zusammenwirkung mit dem Einsetzwerkzeug (101) aufweist, **dadurch gekennzeichnet, dass**:
- der Verankerungsschaft (5) wenigstens eine umlaufende Rille (7) und eine Umfangsrippe (9) aufweist, wobei die umlaufende Rille (7) und die Umfangsrippe (9) jeweils ein abgerundetes Querprofil aufweisen, um mit einer aushärtbaren Substanz (111) zusammenwirken zu können,
- das Innenrohr (25) nicht durchgehend ist,
- der zylinderförmige Körper (3) an dem Ende, das dem Rand (11) gegenüberliegt, einen Querboden (23) aufweist, der ihn vom Verankerungsschaft (5) trennt und vom Innenrohr (25) durchquert wird, und
- der Verankerungsschaft (5) wenigstens einen ersten Kanal und einen zweiten Kanal (21 und 21') aufweist, die parallel zur Umdrehungsachse (A-A') des zylinderförmigen Körpers (3) verlaufen, wobei der erste und zweite Kanal (21 und 21') beiderseits des Innenrohrs (25) angeordnet sind und einerseits in der umlaufenden Rille (7) und andererseits durch den Querboden (23) münden.

2. Einsatz (1) nach dem vorhergehenden Anspruch, **dadurch gekennzeichnet, dass** der Verankerungsschaft (5) eine allgemeine Zylinderform in der Verlängerung des zylinderförmigen Körpers (3) aufweist, und dadurch, dass der Durchmesser des Verankerungsschafts (5) im Bereich der Umfangsrippe (9) kleiner als oder gleich dem Durchmesser des zylinderförmigen Körpers (3) ist.

3. Einsatz (1) nach einem der vorhergehenden Ansprüche, **dadurch gekennzeichnet, dass** die Querprofile der umlaufenden Rille (7) und der Umfangsrippe (9) durchgehend aufeinander folgen.

4. Einsatz (1) nach einem der vorhergehenden Ansprüche, **dadurch gekennzeichnet, dass** die umlaufende Rille (7) und die Umfangsrippe (9) halbkreisförmige Querprofile aufweisen.

5. Einsatz (1) nach einem der vorhergehenden Ansprüche, **dadurch gekennzeichnet, dass** der Verankerungsschaft (5) zwei umlaufende Rillen (7 und 7') und zwei Umfangsrippen (9 und 9') aufweist, die abwechselnd aufeinander folgen.

6. Einsatz (1) nach einem der vorhergehenden Ansprüche, **dadurch gekennzeichnet, dass** der erste und zweite Kanal (21 und 21') durch die umlaufende Rille (7) und die Umfangsrippe (9) vorgesehen sind und einerseits in der umlaufenden Rille (7) und der Umfangsrippe (9) und andererseits durch den Querboden (23) münden.

7. Einsatz (1) nach einem der vorhergehenden Ansprüche, wobei:
- der erste Kanal (21) wenigstens teilweise kegelförmig oder kegelstumpfförmig ist, und
- der zweite Kanal (21') wenigstens teilweise kegelförmig oder kegelstumpfförmig ist oder zylinderförmig ist.

8. Einsatz (1) nach dem vorhergehenden Anspruch, wobei die Kanäle (21, 21') unterschiedliche Durchmesser aufweisen.

9. Einsatz (1) nach einem der Ansprüche 5 und 6, **dadurch gekennzeichnet, dass** die Umfangsrippen (9 und 9') und die umlaufenden Rillen (7 und 7') durch den ersten Kanal und den zweiten Kanal (21 und 21') unterbrochen werden, und dadurch, dass die Kanäle radiale Öffnungen (45 und 45') nach außen aufweisen.

10. Einsatz (1) nach Anspruch 4 in Kombination mit einem der vorhergehenden Ansprüche, **dadurch gekennzeichnet, dass** die halbkreisförmigen Querprofile der umlaufenden Rille (7) und der Umfangsrippe (9) des Verankerungsschafts (5) durch wenigstens einen Ausschnitt (43) parallel zur Umdrehungsachse (A-A') unterbrochen sind, und dadurch, dass der Ausschnitt (43) vom ersten Kanal (21) und vom zweiten Kanal (21') des Verankerungsschafts (5) entfernt sind.

11. Einsatz (1) nach einem der vorhergehenden Ansprüche, **dadurch gekennzeichnet, dass** der Einsatz aus drei Teilen gebildet ist:
- einem ersten Teil, das ein Einlasselement (27) umfasst, bei dem der zylinderförmige Körper (3) und der Verankerungsschaft (5) durch den Querboden (23) des zylinderförmigen Körpers (3) voneinander getrennt sind, wobei der Verankerungsschaft (5) eine zum zylinderförmigen Körper (3) koaxiale Innenleitung (29) aufweist, die mit einem inneren Hohlraum (33) länglicher Form in Verbindung steht, der in einer extremalen Umfangsrippe (91) angeordnet ist, die das freie Ende des Verankerungsschafts (5) bildet, wobei der innere Hohlraum (33) durch eine Öffnung (35) auf der Oberfläche der extremalen Umfangsrippe (91) zugänglich ist,
- einem zweiten Teil, das das Innenrohr (25) umfasst, das mit einem Querfuß (31) an einem seiner Enden fest verbunden ist, wobei das Innenrohr (25) dazu ausgebildet ist, in die Innenleitung (29) des Verankerungsschafts (5) eingeführt zu sein, und der Querfuß (31) dazu ausgebildet ist, in den inneren Hohlraum (33) der extremalen Umfangsrippe (91) zu passen,
- einen dritten Teil, das eine Abdeckung (37) umfasst, die dazu ausgebildet ist, die Öffnung (35) der extremalen Umfangsrippe (91) zu verschließen.

12. Einsatz (1) nach dem vorhergehenden Anspruch, **dadurch gekennzeichnet, dass** der innere Hohlraum (33) Abmessungen aufweist, die größer als die Abmessungen des Querfußes (31) sind, der mit dem Innenrohr (25) fest verbunden ist, und dadurch, dass der Durchmesser der Innenleitung (29) kleiner als oder gleich der Breite des inneren Hohlraums (33) und größer als der Durchmesser des Innenrohrs (25) ist, um zusätzliche Freiheitsgrade zu ermöglichen.

13. Einsatz (1) nach Anspruch 11, **dadurch gekennzeichnet, dass** die Öffnung (35) auf der Oberfläche der extremalen Umfangsrippe (91) eine längliche Form mit einem seitlichen Eingang (39) aufweist, der das Einschieben der Abdeckung (37) ermöglicht.

14. Einsatz (1) nach einem der vorhergehenden Ansprüche, wobei der zylinderförmige Körper (3) des Einsatzes (1) eine verformbare Umfangswand (12) mit wenigstens zwei abstandsgleichen Öffnungen aufweist.

15. Verfahren zum Einbau eines Einsatzes (1) nach einem der vorhergehenden Ansprüche in ein Loch (15) eines Sandwichpanels (13) mittels eines Einsetzwerkzeugs (101), **dadurch gekennzeichnet, dass** es die folgenden aufeinanderfolgenden Schritte aufweist:
- der Einsatz (1) wird durch axialen Druck im Loch (15) positioniert, das zuvor im Sandwichpanel (13) gebildet wurde,
- es wird ein axialer Druck auf das geweitete Ende mit Rand (11) des Einsatzes (1) mithilfe eines Aufsatzes (105) des Einsetzwerkzeugs (101) ausgeübt, um das geweitete Ende mit Rand (11) des Einsatzes (1) in die Oberflächenhaut (17a) des Sandwichpanels (13) eindringen zu lassen, und gleichzeitig wird das Innenrohr (25) mithilfe des Einsetzwerkzeugs (101) so gezogen, dass ein Abschnitt einer verformbaren Umfangswand (12) des zylinderförmigen Körpers (3) des Einsatzes (1) verformt wird und ein erster Bereich mechanischer Verbindung (I) zwischen dem Einsatz (1) und dem Sandwichpanel (13) gebildet wird, so dass am Ende der Montage das Ende mit Rand (11) des Einsatzes (1) und das Ende (26) des Innenrohrs (25) mit der Oberfläche des Sandwichpanels (13) bündig sind,
- es wird eine aushärtbare Substanz (111) durch die Öffnung (35) und durch den ersten Kanal (21) des Verankerungsschafts (5) eingespritzt,
- das Einspritzen wird unterbrochen, wenn die aushärtbare Substanz (111) im zweiten Kanal (21') in der Nähe des Querbodens (23) des zylinderförmigen Körpers (3) detektiert wird.

16. Zusammenbau mit einem Einsatz (1) nach einem der Ansprüche 1 bis 14 und einem Sandwichpanel (13).

## Claims

1. Insert (1) intended to be assembled in a hole (15) in a sandwich panel (13), comprising a hollow cylindrical body (3) having a flanged end (11) deformable by a placement tool (101) allowing mechanical connection by deformation with a surface skin (17a) of said sandwich panel (13), said insert (1) comprising an anchoring stem (5) in the continuation of the cylindrical body (3) as well as an internal tube (25) intended to collaborate with the placement tool (101), **characterized in that:**
- said anchoring stem (5) has at least one circumferential groove (7) and a peripheral rib (9), the circumferential groove (7) and the peripheral rib (9) each having a transverse profile that is rounded so as to be able to collaborate with a curable substance (111),
- the internal tube (25) is blind,
- the cylindrical body (3) has, at the opposite end from the flange (11), a transverse end wall (23) separating it from the anchoring stem (5) and through which the internal tube (25) passes, and
- said anchoring stem (5) comprises at least a first and a second duct (21 and 21') which are parallel to the axis of revolution (A-A') of the cylindrical body (3), said first and second ducts (21 and 21') being positioned on either side of the internal tube (25) and opening on the one hand into the circumferential groove (7) and on the other hand through said transverse end wall (23).

2. Insert (1) according to the preceding claim, **characterized in that** the anchoring stem (5) has a cylindrical overall shape in the continuation of the cylindrical body (3) and **in that** the diameter of said anchoring stem (5) at the peripheral rib (9) is less than or equal to the diameter of the cylindrical body (3).

3. Insert (1) according to either one of the preceding claims, **characterized in that** the transverse profiles of the circumferential groove (7) and of the peripheral rib (9) succeed one another continuously.

4. Insert (1) according to any one of the preceding claims, **characterized in that** the circumferential groove (7) and the peripheral rib (9) have semicircular transverse profiles.

5. Insert (1) according to any one of the preceding claims, **characterized in that** the anchoring stem (5) comprises two circumferential grooves (7 and 7') and two peripheral ribs (9 and 9') succeeding one another in alternation.

6. Insert (1) according to any one of the preceding claims, **characterized in that** said first duct and second ducts (21 and 21') are formed through said circumferential groove (7) and the peripheral rib (9), and open on the one hand into the circumferential groove (7) and the peripheral rib (9), and on the other hand through said transverse end wall (23).

7. Insert (1) according to one of the preceding claims, wherein:
- the first duct (21) is at least partially conical or frustoconical, and
- the second duct (21') is at least partially conical or frustoconical, or is cylindrical.

8. Insert (1) according to the preceding claim, wherein the ducts (21, 21') are of different diameters.

9. Insert (1) according to one of Claims 5 and 6, **characterized in that** the peripheral ribs (9 and 9') and the circumferential grooves (7 and 7') are interrupted by the first duct and the second duct (21 and 21') and **in that** said ducts have radial openings (45 and 45') to the outside.

10. Insert (1) according to Claim 4 in combination with any one of the preceding claims, **characterized in that** the semicircular transverse profiles of the circumferential groove (7) and of the peripheral rib (9) of the anchoring stem (5) are interrupted by at least one cut (43) parallel to the axis of revolution (A-A') and **in that** said cut (43) is distant from the first duct (21) and from the second duct (21') of said anchoring stem (5).

11. Insert (1) according to any one of the preceding claims, **characterized in that** said insert is produced in three pieces:
- a first piece comprising an insetting member (27) with the cylindrical body (3) and the anchoring stem (5) separated from one another by the transverse end wall (23) of the cylindrical body (3), the anchoring stem (5) comprising an internal passage (29) coaxial with the cylindrical body (3) communicating with an internal hollow (33) of oblong shape positioned in an end peripheral rib (91) forming the free end of the anchoring stem (5), said internal hollow (33) being accessible via an opening (35) on the surface of said end peripheral rib (91),
- a second piece comprising the internal tube (25) secured to a transverse foot (31) at one of its ends, said internal tube (25) being configured to be inserted into the internal passage (29) of the anchoring stem (5) and the transverse foot (31) being configured to be housed in the internal hollow (33) of the end peripheral rib (91),
- a third piece comprising a cap (37) configured to close said opening (35) of the end peripheral rib (91).

12. Insert (1) according to the preceding claim, **characterized in that** the internal hollow (33) has dimensions greater than the dimensions of the transverse foot (31) secured to the internal tube (25) and **in that** the diameter of the internal passage (29) is less than or equal to the width of the internal hollow (33) and greater than the diameter of the internal tube (25), so as to allow additional degrees of freedom.

13. Insert (1) according to Claim 11, **characterized in that** the opening (35) on the surface of the end peripheral rib (91) has an oblong shape with a lateral entrance (39) allowing the cap (37) to be inserted by sliding.

14. Insert (1) according to one of the preceding claims, wherein the cylindrical body (3) of the insert (1) comprises a deformable peripheral wall (12) having at least two equidistant orifices.

15. Method for assembling an insert (1) according to any one of the preceding claims, in a hole (15) in a sandwich panel (13) by means of a placement tool (101), **characterized in that** it comprises the following successive steps:
- the insert (1) is positioned by axial pressing in the hole (15) previously formed in the sandwich panel (13),
- axial pressure is applied to the flared flanged end (11) of the insert (1) using an end piece (105) of the placement tool (101) to cause the flared flanged end (11) of the insert (1) to penetrate the surface skin (17a) of the sandwich panel (13), and at the same time the internal tube (25) is pulled using the placement tool (101) so as to deform a portion of a deformable peripheral wall (12) of the cylindrical body (3) of the insert (1) and form a first region (I) of mechanical connection between the insert (1) and the sandwich panel (13) so that, at the end of fitting, the flanged end (11) of the insert (1) and the end (26) of the internal tube (25) come flush with the surface of the sandwich panel (13),
- a curable substance (111) is injected via the opening (35) and through the first duct (21) of the anchoring stem (5),
- injection is interrupted when the curable substance (111) is detected in the second duct (21') in the vicinity of the transverse end wall (23) of the cylindrical body (3).

16. Assembly comprising an insert (1) according to any one of Claims 1 and 14, and a sandwich panel (13).
